# EUROPÄISCHE PATENTANMELDUNG

(11) **EP 3 045 434 A1**
(43) Veröffentlichungstag der Anmeldung: **20.07.2016**
(21) Anmeldenummer: 15151340.5
(22) Anmeldetag: 15.01.2015
(51) Int. Cl.: C03B 9/325, B65D 1/02, B65D 51/16

(54) **Flaschenverschlussmündung mit Belüftzugang**

(71) Anmelder: Vetropack Holding AG, CH-8180 Bülach (CH)
(72) Erfinder: Perner, Franz, 3380 Pöchlarn (AT)
(74) Vertreter: Dilg, Haeusler, Schindelmann Patentanwaltsgesellschaft mbH

(57) **Zusammenfassung**

Mundstück (100) für eine Flasche (400) mit Flaschenverschluss (500), wobei das Mundstück (100) einen Mundstückkörper (102) mit einer endseitigen Ausgießöffnung (104), ein Flaschenverschlussprofil (120) an dem Mundstückkörper (102) zum Anbringen eines Flaschenverschlusses (500) zum Bedecken der Ausgießöffnung (104), und eine an dem Mundstückkörper (102) vorgesehene Belüfteinrichtung (130) zum Ermöglichen eines Druckausgleichs zwischen einem Mundstückinneren (132) und einem Mundstückäußeren (134) aufweist, wenn ein Flaschenverschluss (500) an dem Flaschenverschlussprofil (120) angebracht ist.

## Beschreibung

Die Erfindung betrifft ein Mundstück, eine Flasche, ein Werkzeug zum Herstellen eines Mundstücks, ein Verfahren zum Herstellen eines Mundstücks und ein Verfahren zum Herstellen einer Flasche.

Derzeit werden für Sturm, Federweißen oder neuen Wein entweder PET (Polyethylenterephthalat) Flaschen oder Glasflaschen ohne fix aufgebrachten Verschluss (zum Beispiel Alufolie über den Verschluss gewickelt) verwendet, damit das bei der Gärung entstehende Kohlendioxid (CO₂) entweichen kann. Derartige provisorische Vorkehrungen zum Handhaben der Kohlendioxidentwicklung im Inneren der Flasche sind in Hinblick auf Hygiene, Handhabbarkeit und Robustheit verbesserungsbedürftig.

Ein in EP 1 657 177 A1 beschriebenes Ent- bzw. Belüftungssystem ist an einem Verschluss vorgesehen. Gemäß US 3 114 467 sorgt eine Einlage eines Flaschenverschlusses für eine Selbstentlüftung. US 6 202 870 offenbart einen Flaschenverschluss zur Entlüftung von Gasen. WO 92/00892 realisiert die Entlüftung einer Flasche an einem Verschluss sowie einer Dichtung. DE 42 26 935 offenbart eine Verschlusskappe mit einer elastischen Dichtung, die für eine Entlüftung sorgt. US 4 980 434 offenbart eine Einlage zur Belüftung eines Flaschenverschlusses.

Es ist eine Aufgabe der vorliegenden Erfindung, ein Mundstück für eine Flasche bereitzustellen, die auch für Flüssigkeiten geeignet ist, deren Kohlendioxidproduktion bei Abfüllung noch nicht abgeschlossen ist.

Diese Aufgabe wird durch die Gegenstände mit den Merkmalen gemäß den unabhängigen Ansprüchen gelöst. Weitere Ausführungsbeispiele sind in den abhängigen Ansprüchen gezeigt.

Gemäß einem Ausführungsbeispiel der vorliegenden Erfindung ist ein Mundstück (insbesondere aus Glas) für eine Flasche mit Flaschenverschluss geschaffen, wobei das Mundstück einen Mundstückkörper mit einer endseitigen Ausgießöffnung, ein Flaschenverschlussprofil an dem Mundstückkörper zum Anbringen eines Flaschenverschlusses zum Bedecken der Ausgießöffnung, und eine an dem Mundstückkörper (insbesondere als Teil des Mundstückkörpers) vorgesehene Belüfteinrichtung zum Ermöglichen eines Druckausgleichs zwischen einem Mundstückinneren und einem Mundstückäußeren aufweist, wenn ein Flaschenverschluss an dem Flaschenverschlussprofil angebracht ist.

Gemäß einem weiteren Ausführungsbeispiel der vorliegenden Erfindung ist eine Flasche bereitgestellt, die ein Mundstück mit den oben beschriebenen Merkmalen und einen daran angeschlossenen und damit einstückig ausgebildeten Flaschenkörper aufweist. Der Flaschenkörper kann dabei zum Beispiel aus stoffschlüssig miteinander verbundenen Flaschenkörperformhälften und einem Fertigformboden gefertigt sein.

Gemäß noch einem anderen Ausführungsbeispiel der vorliegenden Erfindung ist ein Werkzeug zum Herstellen eines Mundstücks für eine Flasche mit Flaschenverschluss geschaffen, wobei das Werkzeug zwei Mündungsbacken und eine Führungsscheibe aufweist, die in einer Führungsscheibenaufnahme formschlüssig aufnehmbar ist, welche Führungsscheibenaufnahme in einem zusammengesetzten Zustand der Mündungsbacken zwischen diesen gebildet ist, wobei in dem zusammengesetzten und die Führungsscheibe aufnehmenden Zustand der Mündungsbacken von den Mündungsbacken und der Führungsscheibe eine derart geformte Mündungserzeugungsform begrenzt wird, dass mittels Zuführens von fließfähigem Mundstückrohmaterial, insbesondere flüssigem Glas, in die Mündungserzeugungsform zwischen den Mündungsbacken ein Mundstückkörper ausbildbar ist, an dem ein Flaschenverschlussprofil zum Anbringen eines Flaschenverschlusses zum Bedecken der Ausgießöffnung gebildet ist, und mittels der Führungsscheibe eine endseitige Ausgießöffnung an dem Mundstückkörper begrenzt ist, an der eine Belüfteinrichtung zum Ermöglichen eines Druckausgleichs zwischen einem Mundstückinneren und einem Mundstückäußeren vorgesehen ist, wenn ein Flaschenverschluss an dem Flaschenverschlussprofil angebracht ist.

Gemäß noch einem anderen Ausführungsbeispiel der vorliegenden Erfindung ist ein Verfahren zum Herstellen eines Mundstücks für eine Flasche mit Flaschenverschluss geschaffen, wobei bei dem Verfahren ein Mundstückkörper mit einer endseitigen Ausgießöffnung gebildet wird, ein Flaschenverschlussprofil an dem Mundstückkörper zum Anbringen eines Flaschenverschlusses zum Bedecken der Ausgießöffnung gebildet wird, und eine an dem Mundstückkörper vorgesehene Belüfteinrichtung zum Ermöglichen eines Druckausgleichs zwischen einem Mundstückinneren und einem Mundstückäußeren gebildet wird, wenn ein Flaschenverschluss an dem Flaschenverschlussprofil angebracht ist.

Gemäß noch einem anderen Ausführungsbeispiel der vorliegenden Erfindung ist ein Verfahren zum Herstellen einer Flasche mit Flaschenverschluss bereitgestellt, wobei bei dem Verfahren ein Mundstück der Flasche mit einem Verfahren mit den oben genannten Merkmalen hergestellt wird, ein an das Mundstück angeschlossener und damit einstückig ausgebildeter Flaschenkörper ausgebildet wird, und (vorzugsweise nach Füllen der Flasche mit einer Flüssigkeit, insbesondere mit einem Getränk) ein Flaschenverschluss an dem Mundstückkörper und dem Flaschenverschlussprofil derart angebracht (insbesondere daran angeformt, etwa unter Ausübung eines Pressdrucks auf einen aus einem plastisch deformierbaren Material gebildeten Flaschenverschluss, so dass sich dieser mit einer im Wesentlichen inversen Innenform an eine Außenform des Flaschenverschlussprofils formschlüssig anlegt) wird, dass der Flaschenverschluss unter zumindest teilweiser Freilassung der Belüfteinrichtung zum Ermöglichen eines Druckausgleichs zwischen dem Mundstückinneren und dem Mundstückäußeren die Ausgießöffnung teilumfänglich flüssigkeitsdicht verschließt.

Im Rahmen der vorliegenden Anmeldung wird unter einer "Belüfteinrichtung" insbesondere eine Vorkehrung an einem Mundstück für eine bzw. von einer Flasche verstanden, die einen Druckausgleich zwischen einem Flascheninneren und einem Flaschenäußeren ermöglicht, selbst wenn die Ausgießöffnung von einem Flaschenverschluss überdeckt und das Mundstück daher flüssigkeitsdicht oder zumindest im Wesentlichen flüssigkeitsdicht (d.h. wenn es eine geringfügige Flüssigkeitsleckage zwischen dem Mündungsinneren und dem Mündungsäußeren durch die Belüfteinrichtung hindurch gibt) verschlossen ist. Die Belüfteinrichtung kann ausschließlich durch Mundstückmaterial (insbesondere Glasmaterial des Mundstücks) begrenzt oder gebildet werden. Die Belüfteinrichtung kann also aus Glasmaterial und/oder Aussparungen in Glasmaterial bestehen.

Exemplarische Ausführungsbeispiele der Erfindung beruhen auf der Erkenntnis, dass eine Mündung einer Flasche eine Belüfteinrichtung, insbesondere in Form von einer oder mehreren an der Oberfläche vorgesehenen Aussparungen, aufweist, die dazu dienen, einen erhöhten Innendruck, der zum Beispiel infolge der Gärung einer Füllflüssigkeit der Flasche entsteht, nach außen abzuleiten. Diese Mündung kann ausgebildet sein, um mit einem gängigen Verschluss (insbesondere einem Kronenkork oder einem Schraubverschluss) transport- und verkippgeschützt verschlossen zu werden, ohne dass die Gefahr eines entstehenden Überdrucks im Flascheninneren besteht. Ein derartiges Mundstück und eine zugehörige Flasche haben auch im Hinblick auf Erstöffnung und Produkthygiene gegenüber der oben beschriebenen herkömmlichen Lösung mit Alufolie enorme Vorteile. Somit kann gemäß einem exemplarischen Ausführungsbeispiel eine eine Druckentweichung zulassende und vollständig flüssigkeitsdichte Flasche (insbesondere ausbildbar als Glasflasche) bereitgestellt werden, bei der Keime oder Bakterien nicht zum Inhalt der Flasche gelangen können. Selbst wenn eine solche Flasche stürzen sollte, ist sie vor einem unerwünschten Entleeren geschützt. Eine derartige Flasche hat den Vorteil, dass sie gleichzeitig druckausgleichsfähig und trotzdem flüssigkeitsdicht ist. Anders ausgedrückt kann Gas mit Überdruck aus der Flasche entweichen, dennoch bleibt die Flasche nach außen hin flüssigkeitsdicht. Insbesondere kann die Flaschenmündung eine oder mehrere Aussparungen zum Druckablassen aufweisen. Auf diese Weise kann die Belüfteinrichtung während des Herstellens des Mundstücks im Wesentlichen ohne Zusatzaufwand erzeugt werden. Gleichzeitig können herkömmliche Flaschenverschlüsse zum Zusammenwirken mit Mundstücken gemäß exemplarischen Ausführungsbeispielen eingesetzt werden, ohne dass an den Flaschenverschlüssen spezielle Modifikationen vorgenommen werden müssten.

Gemäß einem Ausführungsbeispiel kann somit eine Mündung mit Aussparungen (zum Beispiel Kerben) zum Druckablass ausgebildet werden. Bei sich aufbauendem Druck wird die Dichtung eines Kronkorkens oder eines anderen Verschlusses angehoben, und über die Aussparung kann Druck entweichen. Auf diese Weise kann ein Druckabbau mit einer Dichtigkeit der Flasche kombiniert werden. Dies ist insbesondere vorteilhaft bei Getränken, welche gären, womit eine sensible Handhabung (zum Beispiel im Hinblick auf Lagerung) der Flaschen entfällt.

Im Weiteren werden zusätzliche exemplarische Ausführungsbeispiele des Mundstücks, der Flasche, des Werkzeugs zum Herstellen eines Mundstücks, des Verfahrens zum Herstellen eines Mundstücks und des Verfahrens zum Herstellen einer Flasche beschrieben.

Gemäß einem Ausführungsbeispiel kann die Belüfteinrichtung an der Ausgießöffnung angeordnet sein. Die Ausgießöffnung selbst, also das erst nach Befüllen und Verschließen flaschenverschlussbedeckte Ende des Mundstücks, ist besonders einfach zugänglich zur Erzeugung der Belüfteinrichtung während des üblichen Herstellungsverfahrens des Mundstücks bzw. der Flasche. Damit ist kein separater Arbeitsgang notwendig, um die Belüfteinrichtung auszubilden. Es ist vollkommen ausreichend, ein ohnehin zum Herstellen des Mundstücks notwendiges Werkzeug im Bereich der Ausgießöffnung entsprechend zu formen, insbesondere mit einem oder mehreren entsprechenden Überständen zu versehen, die invers zu Belüftmulden geformt sind.

Gemäß einem Ausführungsbeispiel kann die Belüfteinrichtung mindestens eine Einkerbung oder Nut (d.h. eine längliche rinnenförmige Vertiefung) an der Ausgießöffnung aufweisen. Eine solche Einkerbung oder Nut an der Ausgießöffnung dient als kleiner Belüftungsspalt, durch welchen hindurch auch nach Abfüllen und Verschließen der Flasche durch deren Füllflüssigkeit erzeugtes Kohlendioxid hindurch in die Umgebung entweichen kann.

Alternativ zum Vorsehen der Belüfteinrichtung als mindestens eine Einkerbung an der Ausgießöffnung kann die Belüfteinrichtung auch durch andere Formen von Aussparungen realisiert werden, zum Beispiel ein oder mehrere Durchgangslöcher durch den Mundstückkörper, die im verschlossenen Flaschenzustand ebenfalls von einem Flaschenverschluss überdeckt sein können.

Sofern eine besonders hohe Flüssigkeitsdichtigkeit gewünscht wird, kann als Belüfteinrichtung an bzw. in dem Mundstück auch ein Ventil vorgesehen werden, das durch den Gasdruck des entstehenden Kohlendioxids zwecks Druckausgleich zeitweise geöffnet werden kann.

Gemäß einem Ausführungsbeispiel kann die Belüfteinrichtung eine Mehrzahl von Aussparungen an und/oder in dem Mundstückkörper aufweisen, insbesondere in Umfangsrichtung um den Mundstückkörper herum verteilt. Durch das Vorsehen mehrerer Aussparungen können diese besonders klein dimensioniert werden, so dass die Tendenz, geringere Mengen von Flüssigkeit hindurchzulassen, durch Kapillareffekte und dergleichen weiter unterdrückt werden kann. Somit kann durch das Vorsehen mehrerer Aussparungen bei Erzielung einer ausreichend hohen Gasdurchlässigkeit zwecks Druckausgleich ein hoher Grad an Flüssigkeitsdichtigkeit erreicht werden.

Gemäß einem Ausführungsbeispiel kann die Belüfteinrichtung mindestens eine Aussparung an und/oder in der Ausgießöffnung aufweisen, welche Aussparung im Mundstückinneren eine geringere Dimension aufweist als im Mundstückäußeren. Dadurch kann sich ein in Gasflussrichtung vom Mundstückinneren zum Mundstückäußeren kontinuierlich oder stufenweise aufweitender Gasflusskanal eröffnen. Damit kann das Kohlendioxid oder anderes Gas aus dem Flascheninneren entweichen, und während des Ausströmens kann ein sukzessiver Druckabbau erfolgen. Am Mundstückäußeren ist dann kein merklicher Gasdruck spürbar.

Gemäß einem Ausführungsbeispiel kann die Belüfteinrichtung mindestens eine Aussparung an und/oder in der Ausgießöffnung aufweisen, wobei sich jede der mindestens einen Aussparung in Umfangsrichtung über einen Winkelbereich zwischen 10° und 70°, insbesondere zwischen 20° und 60°, weiter insbesondere zwischen 30° und 50°, erstrecken kann. Dadurch ist immer noch ein zuverlässiges Schließen des anhaftenden Flaschenverschlusses an dem Mundstück gewährleistet und gleichzeitig bei ausreichend hoher Flüssigkeitsdichtigkeit eine wirksame Entlüftung von im Flascheninneren erzeugtem Überdruck möglich.

Gemäß einem Ausführungsbeispiel kann die Belüfteinrichtung mindestens eine Aussparung an und/oder in der Ausgießöffnung aufweisen, die gegenüber einer endseitigen Stirnfläche der Ausgießöffnung um eine Tiefe zurückversetzt ist, die in einem Bereich zwischen 0,1 mm und 3 mm, insbesondere in einem Bereich zwischen 0,5 mm und 2 mm, weiter insbesondere in einem Bereich zwischen 0,7 mm und 1,5 mm liegt. Bei derart geringen Dimensionen der vertikalen Dicke der einen oder mehreren Aussparungen als Belüfteinrichtung ist aufgrund des Kapillareffekts praktisch kein merklicher Flüssigkeitsstrom aus der Flasche in die Umgebung möglich, selbst wenn die Flasche zum Beispiel beim Transport oder der Handhabung gekippt oder sogar auf den Kopf gestellt wird. Andererseits reichen derartige Dimensionen einer Aussparung aber aus, um im mit dem Flaschenverschluss verschlossenen Zustand des Mundstücks den gewünschten Druckausgleich zu bewerkstelligen.

Gemäß einem Ausführungsbeispiel kann das Mundstück eine Markierung (insbesondere eine Gravur und/oder eine Erhebung und/oder einen Aufdruck) aufweisen, die für einen Inhalt indikativ ist, mit dem eine das Mundstück aufweisende Flasche zu befüllen oder befüllt ist. Durch das entsprechende Markieren des Mundstücks bzw. der Flasche ist eine unerwünschte Verwechslung der Flasche zum Beispiel beim Befüllvorgang vermieden. Dadurch kann zum Beispiel wirksam ausgeschlossen werden, dass beim Abfüllen normalen Weins irrtümlich eine erfindungsgemäße Flasche verwendet wird, die zum Befüllen mit zu Gaserzeugung neigenden Flüssigkeiten ausgebildet ist. Zum Beispiel wird als "Sturm" in Österreich ein Getränk (entsprechend Federweißer in Deutschland) bezeichnet, wenn österreichischer Wein die Basis bildet. Weine aus anderen Ländern, die als solches Getränk in Österreich verkauft werden, werden mit Fantasienamen bezeichnet, zum Beispiel "Räuschling". Damit die Flaschen mit einer "Sturm"-Mündung oder einer Mündung zum Abfüllen sonstiger Kohlensäure entwickelnder Flüssigkeiten im Weinbaubetrieb beim Abfüllen nicht mit gängigen Weinflaschen verwechselt werden, kann die Mündung mit einem Glasrelief mit einer entsprechenden Bezeichnung (zum Beispiel "STURM") gestaltet werden. Es ist allerdings möglich, die Mündung mit einem anderen Schriftzug zu produzieren, um auch nichtösterreichische Weine abzudecken.

Gemäß einem Ausführungsbeispiel kann die Belüfteinrichtung flüssigkeitsdicht und gasdurchlässig ausgebildet sein, wenn ein Flaschenverschluss an dem Flaschenverschlussprofil angebracht ist. Dadurch ist gewährleistet, dass ein durch Gas ausgelöster Überdruck im Inneren der Flasche auch im mittels des Flaschenverschlusses verschlossenen Zustand der Flasche abgebaut werden kann. Gleichzeitig kann ein unerwünschtes Entleeren der Flüssigkeit aus der Flasche vermieden werden, da ungeachtet der Gasdurchlässigkeit die Befülleinrichtung impermeabel oder im Wesentlichen impermeabel für Flüssigkeiten ist.

Gemäß einem Ausführungsbeispiel kann die Flasche einen Flaschenverschluss aufweisen, der zum Bedecken der Ausgießöffnung an dem Flaschenverschlussprofil angebracht oder anbringbar ist. Hierbei nutzt die Erfindung vorteilhaft den Effekt aus, dass herkömmliche Flaschenverschlüsse nicht oder im Wesentlichen nicht angepasst werden müssen, um mit erfindungsgemäßen Mundstücken bzw. Flaschen zum Verschließen zusammenwirken zu können. Auch müssen Werkzeuge und Maschinen zum Verschließen von Flaschen mit Flaschenverschluss nicht angepasst werden, um mit erfindungsgemäßen Mundstücken ausgestattete Flaschen handhaben zu können.

Gemäß einem Ausführungsbeispiel kann der Flaschenverschluss einen Kronkorkenverschluss oder einen Schraubverschluss aufweisen. Ein Aufsetzen eines Kronkorkens auf eine Flasche ist herstellungstechnisch einfach und erlaubt ein wirksames Zusammenspiel mit einer angrenzenden Belüfteinrichtung des Mundstücks. Bei einem Schraubverschluss ist vorteilhaft, dass dieser ein wiederholtes Verschließen ermöglicht.

Gemäß einem Ausführungsbeispiel kann der Flaschenverschluss eine Abdeckkappe mit einer innenseitigen Dichtstruktur aufweisen, welche Dichtstruktur unter zumindest teilweiser Freilassung der Belüfteinrichtung zum Ermöglichen eines Druckausgleichs zwischen dem Mundstückinneren und dem Mundstückäußeren die Ausgießöffnung zumindest teilumfänglich flüssigkeitsdicht verschließt, und welche Abdeckkappe an dem Flaschenverschlussprofil, insbesondere formschlüssig, befestigt oder befestigbar ist. Bei Überdruck im Flascheninneren wirkt dieser durch die offene Belüfteinrichtung auf die elastische Dichtstruktur ein und bahnt sich durch die folglich vorübergehend verformte Dichtstruktur den Weg zum Flaschenäußeren, wodurch der Druckausgleich bewerkstelligt ist.

Insbesondere kann der Flaschenverschluss eine Blechkappe mit einer innenseitigen Dichtschicht (zum Beispiel aus einem elastischen Kunststoff) aufweisen, welche Dichtschicht unter Freilassung der Belüfteinrichtung zum Ermöglichen eines Druckausgleichs zwischen dem Mundstückinneren und dem Mundstückäußeren die Ausgießöffnung (zum Beispiel teilumfänglich) flüssigkeitsdicht verschließt, und welche Blechkappe an dem Flaschenverschlussprofil (insbesondere in Form eines erhaben um das Mundstück umlaufenden Rings, über den ein Kragen der Blechkappe übergestülpt und umgebogen werden kann) formschlüssig befestigt oder befestigbar ist. Ein solcher Kronenkorken kann aus Blech hergestellt sein und kann direkt über dem Flaschenverschlussprofil, das einstückig und einstoffig mit der Flasche aus Glas gebildet sein kann, angeformt bzw. aufgepresst werden, womit an einer Innenseite des Flaschenverschlusses selbsttätig eine formschlüssige Gegenstruktur ausgebildet wird.

Gemäß einem Ausführungsbeispiel kann der Flaschenverschluss also eine Dichtstruktur aufweisen, die derart an die an dem Mundstückkörper vorgesehene Belüfteinrichtung angrenzt, dass bei einem Flascheninnendruck unterhalb eines Schwellwerts ein Durchströmen der Belüfteinrichtung durch Medium vom Flascheninneren zum Flaschenäußeren verunmöglicht ist und bei einem Flascheninnendruck oberhalb des Schwellwerts ein Durchströmen der Belüfteinrichtung durch Medium vom Flascheninneren zum Flaschenäußeren ermöglicht ist. Dadurch kann eine Flüssigkeitsdichtigkeit im Normalbetrieb mit einer Gasdurchlässigkeit im Überdruckfall kombiniert werden.

Gemäß einem Ausführungsbeispiel kann der Flaschenkörper mit einer Flüssigkeit, insbesondere mit einem Getränk, gefüllt sein. Insbesondere kann der Flaschenkörper mit einer Flüssigkeit gefüllt sein, deren Kohlendioxidproduktion bei Abfüllung noch nicht abgeschlossen ist. Flüssigkeiten im Inneren einer Flasche gemäß einem exemplarischen Ausführungsbeispiel können solche sein, bei denen beim Abfüllprozess eine Gasproduktion in der Flüssigkeit noch nicht abgeschlossen ist. Dies kann zum Beispiel junger Wein, Schaumwein, Apfelmost, oder Bier sein.

Gemäß einem Ausführungsbeispiel können die Mündungsbacken und die Führungsscheibe derart ausgebildet und aufeinander angepasst sein, dass mit diesen ein Mundstück mit den oben beschriebenen Merkmalen ausbildbar ist. Wenn die Mündungsbacken und die Führungsscheibe aneinander montiert sind, wird von diesem ein Hohlraum begrenzt, der die Geometrie des herzustellenden Mundstücks zumindest außen- und oberseitig definiert. Dies gilt jedenfalls dann, wenn die hergestellte Flasche nicht (zum Beispiel spanend) nachbearbeitet wird (was allerdings gemäß anderen Ausführungsbeispielen möglich ist), um die Belüfteinrichtung auszubilden. Mit einer entsprechenden Formgebung entsprechender Oberflächenbereiche der Mündungsbacken und der Führungsscheibe kann somit die oben beschriebene Anordnung und Dimensionierung der Belüfteinrichtung gewährleistet werden, um diese im Wirkbereich des Flaschenverschlusses zu positionieren.

Im Folgenden werden exemplarische Ausführungsbeispiele der vorliegenden Erfindung mit Verweis auf die folgenden Figuren detailliert beschrieben.
Figur 1 zeigt in einer Querschnittsansicht ein Detail eines Mundstücks für eine Flasche mit Kronkorkenverschluss gemäß einem exemplarischen Ausführungsbeispiel der Erfindung.
Figur 2 zeigt ein zwei Seitenansichten und eine Draufsicht des in Figur 1 gezeigten Mundstücks.
Figur 3 zeigt vier räumliche Ansichten des in Figur 1 gezeigten Mundstücks.
Figur 4 zeigt eine Flasche gemäß einem exemplarischen Ausführungsbeispiel der Erfindung mit dem in Figur 1 gezeigten Mundstück.
Figur 5 zeigt in einer Querschnittsansicht ein Detail des in Figur 1 gezeigten Mundstücks einer Flasche mit aufgesetztem Kronkorken gemäß einem exemplarischen Ausführungsbeispiel der Erfindung.
Figur 5A zeigt in einer Querschnittsansicht ein Unterdetail der Darstellung gemäß Figur 5.
Figur 6 bis Figur 8 zeigen Werkzeuge zum Herstellen eines Mundstücks für eine Flasche mit Kronkorkenverschluss gemäß exemplarischen Ausführungsbeispielen der Erfindung.
Figur 9 bis Figur 11 zeigen eine räumliche Ansicht, eine Querschnittsansicht und eine Draufsicht eines Mundstücks für eine Flasche mit Verschluss gemäß einem exemplarischen Ausführungsbeispiel der Erfindung.

Gleiche oder ähnliche Komponenten in unterschiedlichen Figuren sind mit gleichen Bezugsziffern versehen.

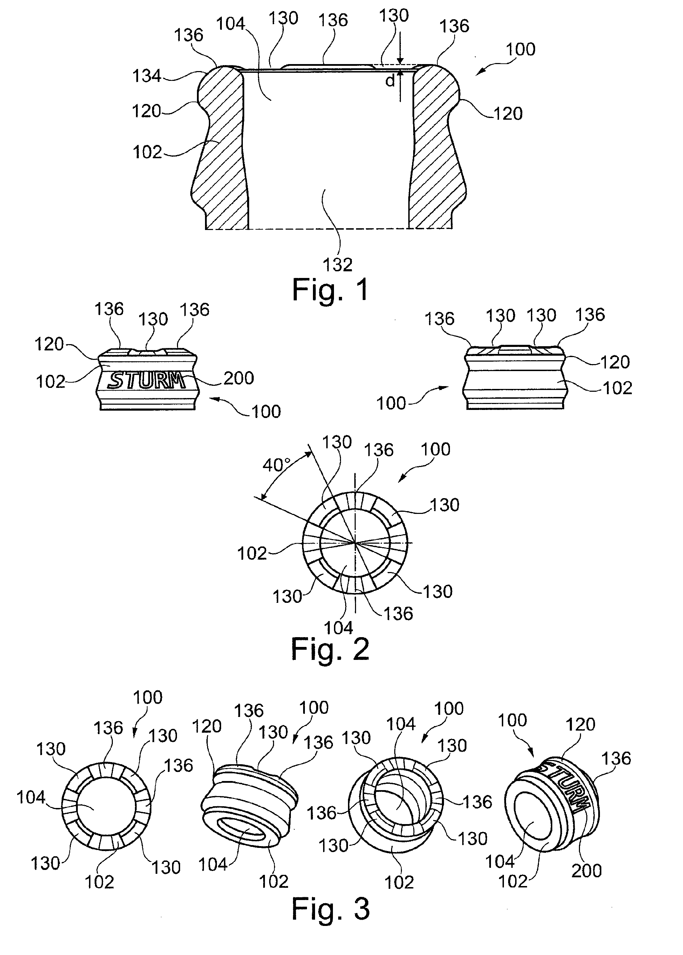

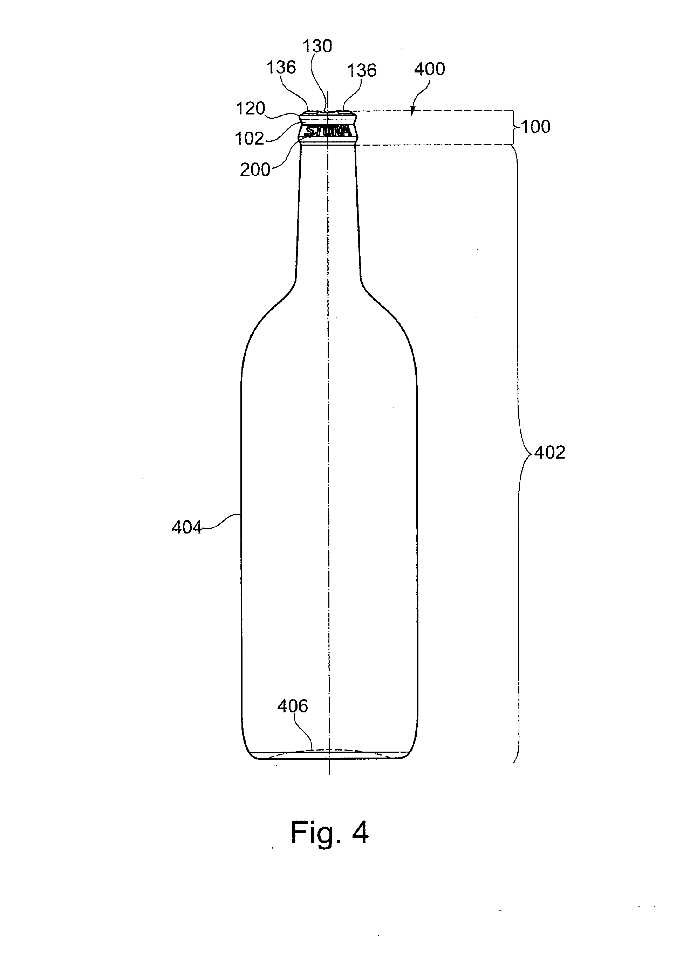

**Figur 1** zeigt in einer Querschnittsansicht ein Detail eines Mundstücks 100 für eine Flasche mit Kronkorkenverschluss (siehe Figur 4) gemäß einem exemplarischen Ausführungsbeispiel der Erfindung.

Das Mundstück 100 weist einen hohlen und im Wesentlichen rotationssymmetrischen Mundstückkörper 102 aus Glas (oder Kunststoff) mit einer endseitigen und ringförmig begrenzten Ausgießöffnung 104 auf. Aus einer Flasche, die aus einem Flaschenkörper, dem Mundstück 101 und einem Kronkorken gebildet ist, und in der eine Flüssigkeit, wie zum Beispiel Kohlensäure entwickelnder junger Wein enthalten ist, kann nach Abnehmen des Kronkorkens mit einem Flaschenöffner die Flüssigkeit durch die Ausgießöffnung 104 herausgegossen werden.

Ein Kronkorkenprofil 120 ist in Form eines umfänglich ringförmig erhabenen Abschnitts an einer Außenseite des Mundstückkörper 102 angeformt und derart konfiguriert, dass ein Kronkorken zum Bedecken der Ausgießöffnung 104 formschlüssig an dem Kronkorkenprofil 120 angebracht (zum Beispiel angepresst) werden kann.

An dem Mundstückkörper 102 ist eine Belüfteinrichtung 130 zum Ermöglichen eines Druckausgleichs zwischen einem Mundstückinneren 132 und einem Mundstückäußeren 134 ausgebildet. Der Druckausgleich ist mittels der Belüfteinrichtung 130 in einem Betriebszustand ermöglicht, in dem ein Kronkorken an dem Kronkorkenprofil 120 zum Verschließen der Flasche und des Mundstücks 100 angebracht ist. Gemäß Figur 1 ist die Belüfteinrichtung 130 an der Ausgießöffnung 104 vorgesehen und in Form von mehreren umfänglichen Einkerbungen bzw. Nuten an der Ausgießöffnung 104 ausgebildet. Somit weist die Belüfteinrichtung 130 mehrere Aussparungen von Flaschenmaterial an dem stirnseitigen Ende des Mundstückkörpers 102 auf, die in Umfangsrichtung um den Mundstückkörper 102 herum verteilt sind. Die Aussparungen an der Ausgießöffnung 104 sind gegenüber einer endseitigen Stirnfläche 136 der Ausgießöffnung 104 um eine Tiefe "d" zurückversetzt, die zum Beispiel 1 mm beträgt.

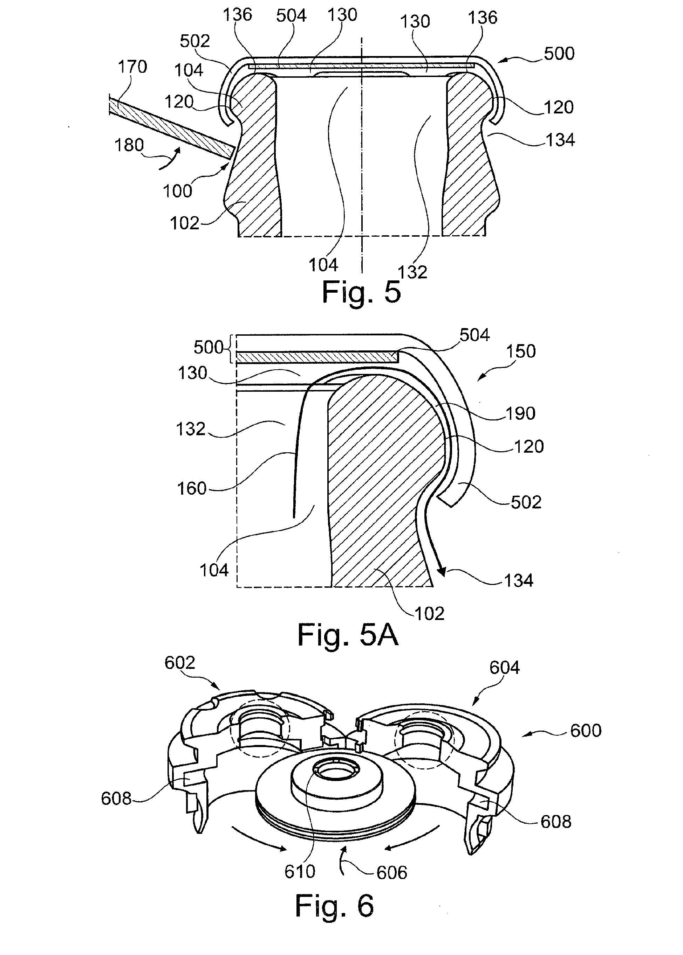

Wenn in eine Flasche, die dem Mundstück 100 zugeordnet ist, eine noch nach dem Befüllvorgang kohlenstoffentwickelnde Flüssigkeit (zum Beispiel junger, noch teilweise unvergorener Wein) eingefüllt ist und die Flasche mit einem Kronkorken verschlossen ist (siehe Figur 5), so bildet die Belüfteinrichtung 130 gemeinsam mit kleinen Lücken bzw. Kanälen zwischen einem umgebogenen Kragen des Kronkorkens und dem Kronkorkenprofil 120 an der umfänglichen Außenfläche des Mundstücks 100 einen Druckabbaumechanismus zum Abbauen eines Gas-Überdrucks im Inneren der verschlossenen Flasche. Genauer gesagt kann von der Flüssigkeit nach dem Befüllvorgang entwickeltes Gas durch die Befülleinrichtung 130 und die Lücken bzw. Kanäle ins Flaschenäußere strömen, womit die Erzeugung eines unerwünschten Überdrucks im Inneren der Flasche verunmöglicht werden kann.

**Figur 2** zeigt ein zwei Seitenansichten und eine Draufsicht des in Figur 1 gezeigten Mundstücks 100. **Figur 3** zeigt vier räumliche Ansichten des in Figur 1 gezeigten Mundstücks 100.

Zunächst ist anhand der Draufsicht des Mundstücks 100 gemäß Figur 2 erkennbar, dass die in diesem Fall vier umfänglich angebrachten Vertiefungen in der endseitigen Stirnfläche 136 bzw. um die Ausgießöffnung 104 des Mundstückkörpers 102 herum als Belüfteinrichtung 130 am Mundstückinneren 132 eine geringere Breite aufweisen als am Mundstückäußeren 134. Anders ausgedrückt weiten sich die Vertiefungen vom Mundstückinneren 132 hin zum Mundstückäußeren 134 auf. Das entweichende Gas kann somit auf dem Weg zwischen dem Mundstückinneren 132 und dem Mundstückäußeren 134 entspannen.

Jede der vier Aussparungen erstreckt sich in Umfangsrichtung über einen Winkelbereich von ungefähr 40°, wie in Figur 2 gezeigt. Besonders vorteilhaft führt die Kombination des genannten Winkelbereichs von ungefähr 40° mit dem genannten Wert der vertikalen Tiefe der Aussparungen (d=1 mm) zu einer Ventilierfähigkeit des Mundstücks 100 für Gas und zeigt (zum Beispiel aufgrund wirkender Kapillareffekte, etc.) gleichzeitig eine Undurchlässigkeit für Flüssigkeiten. Dadurch ist ein Druckausgleich im verschlossenen Zustand der Flasche ermöglicht, wohingegen vorteilhaft selbst bei einer Verkippung der Flasche eine Leckage von in der Flasche enthaltener Flüssigkeit weitgehend oder vollständig ausgeschlossen ist. Diese Vorteile können auch zumindest über einen Winkelbereich von etwa 20° bis etwa 60° sowie eine Dicke d in einem Bereich zwischen ungefähr 0,5 mm bis ungefähr 2 mm erhalten werden.

Das Mundstück 100 weist eine Markierung 200 in Form der alphanumerischen Zeichenfolge "STURM" auf, die als Gravur in dem Mundstückkörper 102 ausgebildet ist. Eine solche Gravur kann ebenfalls schon während des Herstellens des Mundstücks 100 durch eine entsprechende Formgebung des Werkzeugs erzeugt werden, ohne dass ein separater Fertigungsschritt notwendig ist. Die Markierung 200 ist für einen Inhalt indikativ, mit dem eine das Mundstück 100 aufweisende Flasche 400 zu befüllen ist, im gezeigten Beispiel junger österreichischer Wein.

**Figur 4** zeigt eine Flasche 400 gemäß einem exemplarischen Ausführungsbeispiel der Erfindung.

Die zum Beispiel als Glasflasche (oder als Plastikflasche) ausgebildete Flasche 400 weist ein Mundstück 100 mit den bezugnehmend auf Figur 1 bis Figur 3 beschriebenen Merkmalen und einen daran angeschlossenen und damit einstückig ausgebildeten Flaschenkörper 402 auf, der eine im Wesentlichen rotationssymmetrische Mantelfläche 404 und einen gewölbten Boden 406 aufweist. Der Flaschenkörper 402 ist mit einem Getränk füllbar oder gefüllt, dessen Kohlendioxidproduktion bei Abfüllung noch nicht abgeschlossen ist. Nach dem Befüllen kann die Flasche 400 mit einem Kronkorken verschlossen werden, wie in einer Detailansicht des Mundstücks 100 in Figur 5 gezeigt.

**Figur 5** zeigt in einer schematischen Querschnittsansicht ein Detail eines Mundstücks 100 für eine Flasche 400 mit aufgesetztem Kronkorken 500 gemäß einem exemplarischen Ausführungsbeispiel der Erfindung.

Das Mundstück 100 ist gemäß Figur 5 mit dem Kronkorken 500 formschlüssig verbunden, der zum Bedecken der Ausgießöffnung 104 an dem Kronkorkenprofil 120 angebracht und dort festgeklemmt ist. Der Kronkorken 500 weist eine biegbare Blechkappe 502 mit einer innenseitigen Dichtschicht 504 aus elastischem Kunststoff auf. Die Dichtschicht 504 verschließt die Ausgießöffnung 104, allerdings unter Freilassung der Belüfteinrichtung 130 als gezielte Dichtschwachstelle zum Ermöglichen eines Gasflusses zwecks Druckausgleich zwischen dem Mundstückinneren 132 und dem Mundstückäußeren 134. Dennoch ist die Ausgießöffnung 104 von dem Kronkorken flüssigkeitsdicht verschlossen.

Wie in Figur 5 gezeigt, kann unter Verwendung eines Flaschenöffners 170 durch Ausübung einer Hebelbewegung (siehe Pfeil 180) der Kronkorken 500 von dem Mundstück 100 der Flasche 400 abgehoben werden, um Zugang zum Inneren der Flasche 400 zu gewinnen, insbesondere um Flüssigkeit aus der Flasche 400 durch die Ausgießöffnung 104 ausgießen zu können.

**Figur 5A** zeigt in einer Querschnittsansicht ein Sub-Detail 150 der Darstellung gemäß Figur 5. Sollte es, zum Beispiel durch eine Gasentwicklung durch die noch arbeitende Flüssigkeit im Inneren der Flasche 400 nach dem Abfüllen der Flüssigkeit und dem Verschließen mit dem Kronkorken 500, zu einem Überdruck im Inneren der Flasche 400 kommen, so kann zwecks Druckausgleich ein mit Bezugszeichen 160 angedeuteter Gasfluss aus dem Mundstückinneren 132 durch die Belüfteinrichtung 130, einen Spalt 190 zwischen Kronkorken 500 und Mundstück 100 ins Mundstückäußere 134, mithin in die Umgebung, erfolgen. Ein Flüssigkeitsfluss ist dagegen durch die kleinvolumige Vertiefung der Belüfteinrichtung 130 und den schmalen Spalt 190 weitestgehend verunmöglicht.

**Figur 6** zeigt ein Werkzeug 600 zum Herstellen eines Mundstücks 100 für eine Flasche 400 mit Kronkorkenverschluss gemäß einem exemplarischen Ausführungsbeispiel der Erfindung.

Das Werkzeug 600 weist zwei Mündungsbacken 602, 604 und eine Führungsscheibe 606 auf, die in einer Führungsscheibenaufnahme 608 formschlüssig aufnehmbar ist. Die Führungsscheibenaufnahme 608 ist in einem zusammengesetzten Zustand der Mündungsbacken 602, 604 zwischen diesen gebildet. In dem zusammengesetzten und die Führungsscheibe 606 aufnehmenden Zustand der Mündungsbacken 602, 604 wird von den Mündungsbacken 602, 604 und der Führungsscheibe 606 eine derart geformte Mündungserzeugungsform begrenzt, dass mittels Zuführens von fließfähigem Mundstückrohmaterial, insbesondere flüssigem Glas, in die Mündungserzeugungsform zwischen den Mündungsbacken 602, 604 ein Mundstückkörper 102 ausbildbar ist, an dem ein Kronkorkenprofil 120 zum Anbringen eines Kronkorkens 500 zum Bedecken der Ausgießöffnung 104 gebildet ist. Mittels der Führungsscheibe 606 ist gleichzeitig eine endseitige Ausgießöffnung 104 an dem Mundstückkörper 102 begrenzt, an der eine Belüfteinrichtung 130 zum Ermöglichen eines Druckausgleichs zwischen einem Mundstückinneren 132 und einem Mundstückäußeren 134 vorgesehen ist, wenn ein Kronkorken 500 an dem Kronkorkenprofil 120 angebracht ist.

Die Mündungsbacken 602, 604 und die Führungsscheibe 606 sind derart ausgebildet und aufeinander angepasst, dass mit diesen ein Mundstück 100 mit den oben beschriebenen Merkmalen ausbildbar ist: Überstände 610 an der Führungsscheibe 606 bilden beim Mundstückherstellen Vertiefungen in dem Mundstück 100, die wiederum die Belüfteinrichtung 130 darstellen.

Mit dem in Figur 6 gezeigten Werkzeug 600 ist ein Verfahren zum Herstellen eines Mundstücks 100 für eine Flasche 400 mit Kronkorkenverschluss ausführbar. Bei dem Verfahren wird ein Mundstückkörper 102 mit einer endseitigen Ausgießöffnung 104 gebildet. Ferner wird ein Kronkorkenprofil 120 an dem Mundstückkörper 102 zum Anbringen eines Kronkorkens 500 zum Bedecken der Ausgießöffnung 104 gebildet. Darüber hinaus wird eine an dem Mundstückkörper 102 vorgesehene Belüfteinrichtung 130 zum Ermöglichen eines Druckausgleichs zwischen einem Mundstückinneren 132 und einem Mundstückäußeren 134 gebildet, wenn ein Kronkorken 500 an dem Kronkorkenprofil 120 angebracht ist.

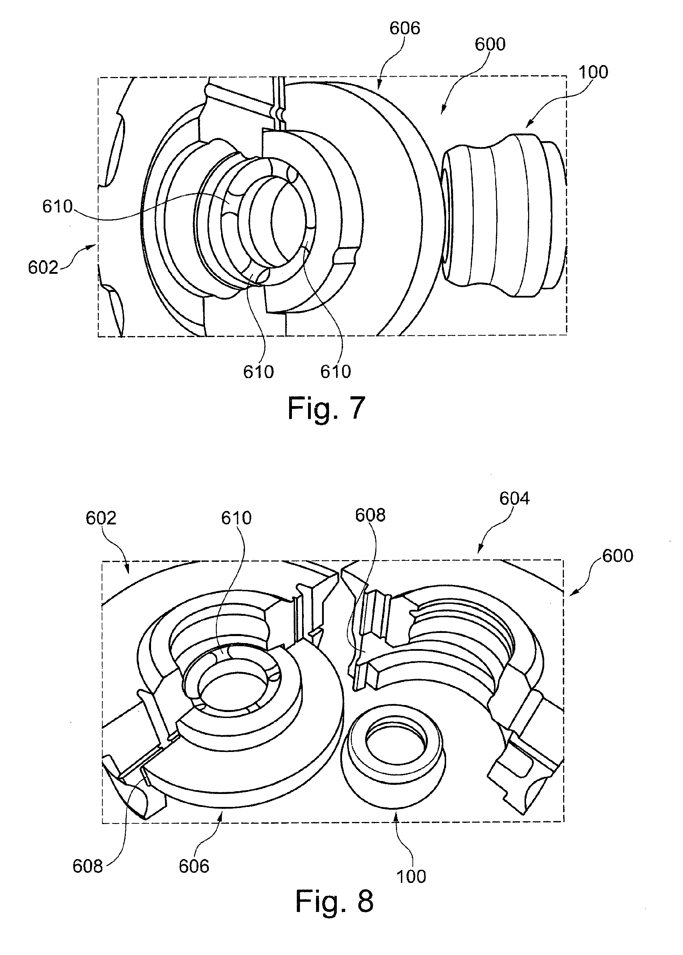

**Figur 7** und **Figur 8** zeigen Werkzeuge 600 gemäß anderen exemplarischen Ausführungsbeispielen der Erfindung. Gemäß Figur 7 sind mehrere Überstände 610 umfänglich an dem Werkzeug 600 vorgesehen, um korrespondierend mehrere Nuten als Belüfteinrichtung 130 zu bilden. Gemäß Figur 8 ist dagegen nur ein einziger Überstand 610 zum Bilden einer einzigen Nut als Belüfteinrichtung 130 vorgesehen, wobei der Überstand 610 eine ansonsten umfänglich geschlossene Ringnut unterbricht.

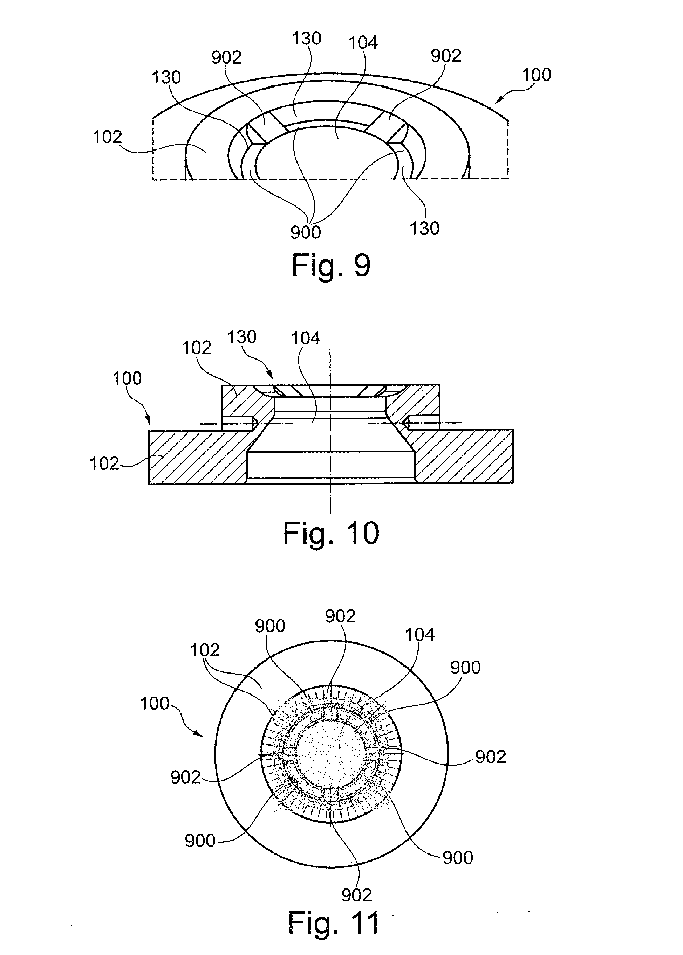

**Figur 9** zeigt eine räumliche Ansicht, **Figur 10** eine Querschnittsansicht und **Figur 11** eine Draufsicht eines Mundstücks 100 für eine Flasche mit Verschluss gemäß einem anderen exemplarischen Ausführungsbeispiel der Erfindung. Die Belüfteinrichtung 130 ist gemäß Figur 9 bis Figur 11 dadurch gebildet, dass eine die Ausgießöffnung 104 umgebende Ringnut 900 von mehreren Rippen 902 unterbrochen wird.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Mundstück (100) für eine Flasche (400) mit Flaschenverschluss (500), wobei das Mundstück (100) aufweist:
einen Mundstückkörper (102) mit einer endseitigen Ausgießöffnung (104);
ein Flaschenverschlussprofil (120) an dem Mundstückkörper (102) zum Anbringen eines Flaschenverschlusses (500) zum Bedecken der Ausgießöffnung (104);
eine an dem Mundstückkörper (102) vorgesehene Belüfteinrichtung (130) zum Ermöglichen eines Druckausgleichs zwischen einem Mundstückinneren (132) und einem Mundstückäußeren (134), wenn ein Flaschenverschluss (500) an dem Flaschenverschlussprofil (120) angebracht ist.

2. Mundstück (100) gemäß Anspruch 1, wobei die Belüfteinrichtung (130) an der Ausgießöffnung (104) angeordnet ist.

3. Mundstück (100) gemäß Anspruch 1 oder 2, wobei die Belüfteinrichtung (130) mindestens eine Einkerbung oder Nut an der Ausgießöffnung (104) aufweist.

4. Mundstück (100) gemäß einem der Ansprüche 1 bis 3, wobei die Belüfteinrichtung (130) eine Mehrzahl von Aussparungen an und/oder in dem Mundstückkörper (102) aufweist, insbesondere in Umfangsrichtung um den Mundstückkörper (102) herum verteilt.

5. Mundstück (100) gemäß einem der Ansprüche 1 bis 4, wobei die Belüfteinrichtung (130) mindestens eine Aussparung an und/oder in der Ausgießöffnung (104) aufweist, welche Aussparung am Mundstückinneren (132) eine geringere Dimension aufweist als am Mundstückäußeren (134).

6. Mundstück (100) gemäß einem der Ansprüche 1 bis 5, wobei die Belüfteinrichtung (130) mindestens eine Aussparung an und/oder in der Ausgießöffnung (104) aufweist, wobei sich jede der mindestens einen Aussparung in Umfangsrichtung über einen Winkelbereich zwischen 10° und 70°, insbesondere zwischen 20° und 60°, weiter insbesondere zwischen 30° und 50°, erstreckt.

7. Mundstück (100) gemäß einem der Ansprüche 1 bis 6, aufweisend zumindest eines der folgenden Merkmale:
wobei die Belüfteinrichtung (130) mindestens eine Aussparung an und/oder in der Ausgießöffnung (104) aufweist, die gegenüber einer endseitigen Stirnfläche (136) der Ausgießöffnung (104) um eine Tiefe zurückversetzt ist, die in einem Bereich zwischen 0,1 mm und 3 mm, insbesondere in einem Bereich zwischen 0,5 mm und 2 mm, weiter insbesondere in einem Bereich zwischen 0,7 mm und 1,5 mm liegt;
aufweisend eine Markierung (200), insbesondere eine Gravur, eine Erhebung oder einen Aufdruck, wobei die Markierung (200) für einen Inhalt indikativ ist, mit dem eine das Mundstück (100) aufweisende Flasche (400) zu befüllen ist;
wobei die Belüfteinrichtung (130) flüssigkeitsdicht und gasdurchlässig ausgebildet ist, wenn ein Flaschenverschluss (500) an dem Flaschenverschlussprofil (120) angebracht ist.

8. Flasche (400), insbesondere Glasflasche, aufweisend ein Mundstück (100) gemäß einem der Ansprüche 1 bis 7 und einen daran angeschlossenen und damit einstückig ausgebildeten Flaschenkörper (402).

9. Flasche (400) gemäß Anspruch 8, aufweisend einen Flaschenverschluss (500), der zum Bedecken der Ausgießöffnung (104) an dem Flaschenverschlussprofil (120) angebracht oder anbringbar ist.

10. Flasche (400) gemäß Anspruch 9, aufweisend zumindest eines der folgenden Merkmale:
wobei der Flaschenverschluss (500) einen Kronkorkenverschluss oder einen Schraubverschluss aufweist;
wobei der Flaschenverschluss (500) eine Abdeckkappe (502) mit einer innenseitigen Dichtstruktur (504) aufweist, welche Dichtstruktur (504) unter zumindest teilweiser Freilassung der Belüfteinrichtung (130) zum Ermöglichen eines Druckausgleichs zwischen dem Mundstückinneren (132) und dem Mundstückäußeren (134) die Ausgießöffnung (104) zumindest teilumfänglich flüssigkeitsdicht verschließt, und welche Abdeckkappe (502) an dem Flaschenverschlussprofil (120), insbesondere formschlüssig, befestigt oder befestigbar ist;
wobei der Flaschenverschluss (100) eine Dichtstruktur (504) aufweist, die derart an die an dem Mundstückkörper (102) vorgesehene Belüfteinrichtung (130) angrenzt, dass bei einem Flascheninnendruck unterhalb eines Schwellwerts ein Durchströmen der Belüfteinrichtung (130) durch Medium vom Flascheninneren zum Flaschenäußeren verunmöglicht ist und bei einem Flascheninnendruck oberhalb des Schwellwerts ein Durchströmen der Belüfteinrichtung (130) durch Medium vom Flascheninneren zum Flaschenäußeren ermöglicht ist.

11. Flasche (400) gemäß einem der Ansprüche 8 bis 10, aufweisend zumindest eines der folgenden Merkmale:
wobei der Flaschenkörper (402) mit einer Flüssigkeit, insbesondere mit einem Getränk, weiter insbesondere mit einem gashaltigen Getränk, gefüllt ist;
wobei der Flaschenkörper (402) mit einer Flüssigkeit gefüllt ist, deren Kohlendioxidproduktion bei Abfüllung noch nicht abgeschlossen ist.

12. Werkzeug (600) zum Herstellen eines Mundstücks (100) für eine Flasche (400) mit Flaschenverschluss (500), wobei das Werkzeug (600) aufweist:
zwei Mündungsbacken (602, 604); und
eine Führungsscheibe (606), die in einer Führungsscheibenaufnahme (608) formschlüssig aufnehmbar ist, welche Führungsscheibenaufnahme (608) in einem zusammengesetzten Zustand der Mündungsbacken (602, 604) zwischen diesen gebildet ist;
wobei in dem zusammengesetzten und die Führungsscheibe (606) aufnehmenden Zustand der Mündungsbacken (602, 604) von den Mündungsbacken (602, 604) und der Führungsscheibe (606) eine derart geformte Mündungserzeugungsform begrenzt wird, dass mittels Zuführens von fließfähigem Mundstückrohmaterial, insbesondere flüssigem Glas, in die Mündungserzeugungsform:
zwischen den Mündungsbacken (602, 604) ein Mundstückkörper (102) ausbildbar ist, an dem ein Flaschenverschlussprofil (120) zum Anbringen eines Flaschenverschlusses (500) zum Bedecken der Ausgießöffnung (104) gebildet ist;
mittels der Führungsscheibe (606) eine endseitige Ausgießöffnung (104) an dem Mundstückkörper (102) begrenzt ist, an der eine Belüfteinrichtung (130) zum Ermöglichen eines Druckausgleichs zwischen einem Mundstückinneren (132) und einem Mundstückäußeren (134) vorgesehen ist, wenn ein Flaschenverschluss (500) an dem Flaschenverschlussprofil (120) angebracht ist.

13. Werkzeug (600) gemäß Anspruch 12, wobei die Mündungsbacken (602, 604) und die Führungsscheibe (606) derart ausgebildet und aufeinander angepasst sind, dass mit diesen ein Mundstück (100) gemäß einem der Ansprüche 1 bis 7 ausbildbar ist.

14. Verfahren zum Herstellen eines Mundstücks (100) für eine Flasche (400) mit Flaschenverschluss (500), wobei das Verfahren aufweist:
Bilden eines Mundstückkörpers (102) mit einer endseitigen Ausgießöffnung (104);
Bilden eines Flaschenverschlussprofils (120) an dem Mundstückkörper (102) zum Anbringen eines Flaschenverschlusses (500) zum Bedecken der Ausgießöffnung (104);
Bilden einer an dem Mundstückkörper (102) vorgesehenen Belüfteinrichtung (130) zum Ermöglichen eines Druckausgleichs zwischen einem Mundstückinneren (132) und einem Mundstückäußeren (134), wenn ein Flaschenverschluss (500) an dem Flaschenverschlussprofil (120) angebracht ist.

15. Verfahren zum Herstellen einer Flasche (400) mit Flaschenverschluss (500), wobei das Verfahren aufweist:
Herstellen eines Mundstücks (100) der Flasche (400) gemäß Anspruch 14;
Ausbilden eines an das Mundstück (100) angeschlossenen und damit einstückig ausgebildeten Flaschenkörpers (402);
Anbringen eines Flaschenverschlusses (500) an dem Mundstückkörper (102) und dem Flaschenverschlussprofil (120) derart, dass der Flaschenverschluss (500) unter zumindest teilweiser Freilassung der Belüfteinrichtung (130) zum Ermöglichen eines Druckausgleichs zwischen dem Mundstückinneren (132) und dem Mundstückäußeren (134) die Ausgießöffnung (104) teilumfänglich flüssigkeitsdicht verschließt.
